# EUROPEAN PATENT APPLICATION

(11) **EP 0 933 535 A1**
(43) Date of publication of application: **04.08.1999**
(21) Application number: 98500027.2
(22) Date of filing: 03.02.1998
(51) Int. Cl.: F16B 1/00, A01K 31/08, F16B 5/00

(54) **Assembly clip for animal cage gratings**

(71) Applicant: Manufacturas Metalurgicas RSL, S.L., 08110 Montcada I Reixac (Barcelona) (ES)
(72) Inventor: Rins, Jose Luis Lopez, 08110 Montcada I Reixac, Barcelona (ES)
(74) Representative: Perez Bonal, Bernardo

(57) **Abstract**

It is provided with an angular exterior piece (1) and a clip (2), with asymmetrical side, with double articulation flat bars (3) and (3'), plus straight internal wings (4) and other free wings (5) of elbowed ends (6), which are stiffeners and retainers of the bars (7) of the cage.

## Description

### OBJECT OF THE INVENTION

The invention defended, consists of a clip for the assembly of animal cage gratings, from among various profiles used as locking of diverse objects.

The invention is characterized by a special construction of the profile, at an angle, which incorporates an internal, asymmetrical clip, with wide wings of slanting arrangement, in such a manner, that they exert a great locking pressure and make impossible the accidental unlocking of the cage.

### BACKGROUND OF THE INVENTION

Various parallelepipedic objects exist, which are constructed as from laminar pieces, provided with locking and reinforcement profiles, at edges and also at vertexes.

On the other hand, animal cages based on gratings which form different planes of the cage are common, the latter supplied in finished condition and with the ends of the bars welded to each other.

This circumstance forces the cage to be stored and transported in already assembled conditions with the resulting expenses due to the volume it occupies, in addition to the operative welding cost, no matter how automatic is the operation of the same.

The Applicant knows of cages of Chinese origin, without information as to whether they are the object of a National or an International Patent, and which are assembled at the moment of use, due to having dies prior to construction, which, in spite of the fact that they help the user during the assembly, raise however, the manpower production costs, which is only justified by the special circumstances related to the wages of said country.

With this exception, the Applican,is ignorant of the existance of unwelded cages, that is to say, cages ready for assembly at the moment of use and dismountable for storage, in cases when the same are not being employed by the user.

### DESCRIPTION OF THE INVENTION

The invention which is the object of the present specification refers to a profile, constituted into edge reinforcement and in a clip assembly for animal cage gratings, from among those metallic or plastic profiles, used as locking means of very diverse objects.

The invention is characterized by a special construction of the profile, an exterior angular piece which internally includes, though slightly projecting by its edges, a piece in the manner of clip, this clip being constructed with asymmetrical side and with double articulation line, in a very irregular "H" shape.

Said "H" shaped clip, is provided with internal, straight wings, which are the ones which are provided attached and coplanar with the internal face of the angular profile.

Behind its short central web, said clip which opens by its rear part, in the form of branching, shows wide free wings; constructed in slanting arrangement and with its respective ends elbowed, for stiffening and helping of the locking, preventing the accidental detachment of the cage.

### DESCRIPTION OF THE DRAWINGS

To complement the description being made, and with the object of helping the improved and easier understanding of the characteristics of the invention, the present Specification is attached with a set of drawings, forming integral part of the same, in which, with illustrative and never limitative character, the following have been represented:

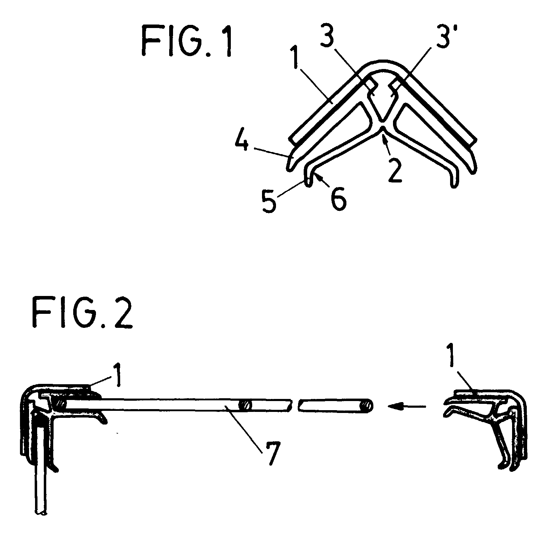

Figure 1 shows a section of the assembly clip of the present invention.
Figure 2 is an assembly section of an edge of the box, attaching the clip to the free end of a grating, with the angle of the box already assembled.

### PREFERRED EMBODIMENT OF THE INVENTION

In view of what has been previously stated, the present invention refers to an assembly clip for animal cage gratings, of metallic or plastic profiles for diverse locking elements, finished off at the corners either with lateral stops or at an angle, which characterises an external angular piece (1) and, slightly projecting by its edges, a piece in the shape of a clip (2) with asymmetrical side and with double articulation flat bars (3) and (3'), and straight internal wings (4), coplanar with the angular profile (1), plus wide free wings (5) in slanting arrangement and with their ends (6) elbowed, in such a manner that they stiffen the wing, and in passing, help to exert a great locking pressure on the bars (6), making impossible the accidental dismounting of the cage, due, for example, to an unforeseen fall or blows.

This description is not more extensive, with the understanding that any expert in the art will have sufficient information to understand the scope of the invention and the advantages derived from the same, as well as the manner of proceeding to its reproduction.

It is understood that if the essentiality of the invention is not altered, both the variations regarding the material and the shape, the size and the arrangement of the elements are capable of variation characterized within the same.

The terms used during the description and their meaning shall always be considered in a non limitative manner.

## Claims

1. Assembly clip for animal cage gratings, from among those metallic or plastic profiles used for the locking of edges, finished off at a corner or else at a side stop or otherwise at an angle, which characterizes an external angular piece (1) and a piece in the shape of a clip (2), with asymmetrical side, with double articulation flat bars (3) and (3'), and straight internal wings (4), coplanar with the angular profile (1), plus wide free wings (5) of elbowed ends (6), which are stiffeners and retainers of the bars (7) of the cage.
